# EUROPEAN PATENT APPLICATION

(11) **EP 4 780 076 A1**
(43) Date of publication of application: **22.07.2026**
(21) Application number: 23951913.5
(22) Date of filing: 15.09.2023
(51) Int. Cl.: H04W 48/08

(54) **TDLS COMMUNICATION NEGOTIATION METHOD, DEVICE, AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Stöckeler, Ferdinand
(86) International application number: PCT/CN2023/119184
(87) International publication number: WO 2025/054984

(57) **Abstract**

The embodiments of the present disclosure relate to a TDLS communication negotiation method, a device, and a communication system. The TDLS communication negotiation method comprises: a TDLS initiating end sending to an access point device a first enhanced multi-link (EML) operation mode notification frame; and before the reception of a second EML operation mode notification frame with which the access point device replies, or before the arrival of an EML transition timeout, sending a TDLS discovery request frame to a TDLS responding end by means of the access point device. Therefore, before a TDLS initiating end enters an EML operation mode, a TDLS responding end is effectively discovered, a TDLS connection is established, and a TDLS discovery process is perfected, thereby improving the accuracy and efficiency of establishment of a TDLS link.

## Description

### TECHNICAL FIELD

The disclosure relates to the field of communication technologies, in particular to a tunneled direct link setup (TDLS) communication negotiation method, device and communication system.

### BACKGROUND

To achieve extremely high throughput (EHT), multi-link operation (MLO) is considered one of key technologies in current wireless fidelity (Wi-Fi) research. EHT devices support multi-link communication and have the ability to communicate in parallel on multiple links or frequency bands, and are called multi-link devices (MLDs). With the help of MLO technology, multiple access point (AP) MLDs and non-AP MLDs can establish multiple links across frequency bands, which greatly improves throughput.

The MLD includes one or more affiliated stations (STAs) that operate on one link. The MLD can be an AP MLD or a non-AP MLD, with the corresponding affiliated STA being an AP and a non-AP STA, respectively.

Considering the limited reception capabilities of some STAs, 802.11be has introduced enhanced multi-link (EML) modes for non-AP MLDs, including an EML single radio (EMLSR) mode and an EML multiple radio (EMLMR) mode. Therefore, it is necessary to further improve working mechanisms of the EML modes.

### SUMMARY

The embodiments of the disclosure provide a TDLS communication negotiation method, device and communication system, to further improve working mechanisms of EML modes.

According to a first aspect, the embodiments of the disclosure provide a TDLS communication negotiation method. The method includes:
sending, by a TDLS initiator, a first EML operation mode notification frame to an AP; and
sending a TDLS discovery request frame to a TDLS responder via the AP before receiving a second EML operation mode notification frame sent by the AP or before an EML transition timeout expires.

According to a second aspect, the embodiments of the disclosure provide a TDLS communication negotiation method. The method includes:
receiving, by an AP, a first EML operation mode notification frame sent by a TDLS initiator; and
receiving a TDLS discovery request frame sent by the TDLS initiator, and forwarding the TDLS discovery request frame to a TDLS responder before sending a second EML operation mode notification frame to the TDLS initiator or before an EML transition timeout expires.

According to a third aspect, the embodiments of the disclosure provide a TDLS communication negotiation method. The method includes:
receiving, by a TDLS responder, a TDLS discovery request frame forwarded by an AP;
in which the TDLS discovery request frame is received by the AP from a TDLS initiator before sending a second EML operation mode notification frame to the TDLS initiator or before an EML transition timeout expires and forwarded to the TDLS responder; and
the second EML operation mode notification frame is used to respond to a first EML operation mode notification frame sent by the TDLS initiator.

According to a fourth aspect, the embodiments of the disclosure provide a TDLS initiator. The TDLS initiator includes:
a first sending module, configured to send a first EML operation mode notification frame to an AP; and
a second sending module, configured to send a TDLS discovery request frame to a TDLS responder via the AP before receiving a second EML operation mode notification frame sent by the AP or before an EML transition timeout expires.

According to a fifth aspect, the embodiments of the disclosure provide an AP. The AP includes:
a first receiving module, configured to receive a first EML operation mode notification frame sent by a TDLS initiator; and
a forwarding module, configured to, receive a TDLS discovery request frame sent by the TDLS initiator, and forward the TDLS discovery request frame to a TDLS responder before sending a second EML operation mode notification frame to the TDLS initiator or before an EML transition timeout expires,.

According to a sixth aspect, the embodiments of the disclosure provide a TDLS responder. The TDLS responder includes:
a second receiving module, configured to receive a TDLS discovery request frame forwarded by an AP;
in which the TDLS discovery request frame is received by the AP from a TDLS initiator before sending a second EML operation mode notification frame to the TDLS initiator or before an EML transition timeout expires and then forwarded to the TDLS responder; and
the second EML operation mode notification frame is used to respond to a first EML operation mode notification frame sent by the TDLS initiator.

According to a seventh aspect, the embodiments of the disclosure provide a TDLS initiator. The TDLS initiator includes:
one or more processors;
in which the TDLS initiator is used to implement the TDLS communication negotiation method in the embodiments of the disclosure.

According to an eighth aspect, the embodiments of the disclosure provide an AP. The AP includes:
one or more processors;
in which the AP is used to implement the TDLS communication negotiation method in the embodiments of the disclosure.

According to a ninth aspect, the embodiments of the disclosure provide a TDLS responder. The TDLS responder includes:
one or more processors;
in which the TDLS responder is used to implement the TDLS communication negotiation method in the embodiments of the disclosure.

The embodiments of the disclosure also provide a communication system. The communication system includes a TDLS initiator, an AP and a TDLS responder. The TDLS initiator is used to implement the TDLS communication negotiation method in the embodiments of the disclosure, the AP is used to implement the TDLS communication negotiation method in the embodiments of the disclosure, and the TDLS responder is used to implement the TDLS communication negotiation method in the embodiments of the disclosure.

The embodiments of the disclosure also provide a storage medium. The storage medium stores instructions, and when the instructions are executed by a communication device, the communication device is caused to implement the TDLS communication negotiation method in the embodiments of the disclosure.

In the embodiments of the disclosure, the TDLS initiator sends the TDLS discovery request frame to the TDLS responder via the AP before receiving the second EML operation mode notification frame sent by the AP or before the EML transition timeout expires, such that the TDLS responder replies the TDLS discovery response frame before the TDLS initiator enters the EML operation mode. This enables the TDLS initiator to effectively discover the TDLS responder before entering the EML operation mode, establish a TDLS connection, which improves the TDLS discovery process, thereby improving the accuracy and efficiency of TDLS link establishment.

Additional aspects and advantages of the disclosure will be given in part in the following descriptions, become apparent in part from the following descriptions, or be learned from the practice of the disclosure.

### BRIEF DESCRIPTION OF THE DRAWINGS

In order to more clearly explain the technical solutions of the embodiments of the disclosure, the accompanying drawings required for the descriptions of the embodiments are introduced below. The following drawings are only some embodiments of the disclosure and do not impose specific limitations on the protection scope of the disclosure.
FIG. 1 is an exemplary schematic diagram of a communication system provided according to an embodiment of the disclosure.
FIG. 2 is an interactive schematic diagram 1 of a method provided according to an embodiment of the disclosure.
FIG. 3 is an interactive schematic diagram 2 of a method provided according to an embodiment of the disclosure.
FIG. 4 is an interactive schematic diagram 3 of a method provided according to an embodiment of the disclosure.
FIG. 5 is a flowchart 1 of a TDLS communication negotiation method provided according to an embodiment of the disclosure.
FIG. 6 is a flowchart 2 of a TDLS communication negotiation method provided according to an embodiment of the disclosure.
FIG. 7 is a flowchart 3 of a TDLS communication negotiation method provided according to an embodiment of the disclosure.
FIG. 8 is a schematic structural diagram of a TDLS initiator provided according to an embodiment of the disclosure.
FIG. 9 is a schematic structural diagram of an AP provided according to an embodiment of the disclosure.
FIG. 10 is a schematic structural diagram of a TDLS responder provided according to an embodiment of the disclosure.
FIG. 11 is a schematic structural diagram of a terminal provided according to an embodiment of the disclosure.
FIG. 12 is a schematic structural diagram of a chip provided according to an embodiment of the disclosure.

### DETAILED DESCRIPTION

The embodiments of the disclosure provide a TDLS communication negotiation method, a device and a communication system.

According to a first aspect, the embodiments of the disclosure provide a TDLS communication negotiation method. The method includes:
sending by a TDLS initiator a first EML operation mode notification frame to an AP; and
sending a TDLS discovery request frame to a TDLS responder via the AP before receiving a second EML operation mode notification frame sent by the AP or before an EML transition timeout expires.

This enables the TDLS initiator to effectively discover the TDLS responder before entering the EML operation mode, establish a TDLS connection, which improves the TDLS discovery process, thereby improving the accuracy and efficiency of TDLS link establishment.

In combination with some embodiments of the first aspect, in some embodiments, the TDLS discovery request frame includes at least one of:
a response timeout for the TDLS responder to send a TDLS discovery response frame; or
information on an EML operation mode of the TDLS initiator, in which the EML operation mode indicates whether a connection corresponding to a direct link of the TDLS initiator is an EML connection.

In the above embodiments, the TDLS discovery request frame carries the response timeout, to enable the TDLS responder to send the TDLS discovery response frame within the response timeout. Through the TDLS discovery request frame carrying the information on the EML operation mode, the TDLS responder determines whether the connection corresponding to the direct link of the TDLS initiator is an EML connection.

In combination with some embodiments of the first aspect, in some embodiments, the TDLS discovery request frame includes a TDLS multi-link element;
a Multi-Link Control field of the TDLS multi-link element includes a Presence Bitmap subfield; and
the Presence Bitmap subfield includes a response timeout presence identification bit, in which the response timeout presence identification bit indicates whether a Common Info field of the TDLS multi-link element includes a TDLS discovery response timeout subfield, and the TDLS discovery response timeout subfield is used to carry the response timeout.

In the above embodiments, by indicating whether the TDLS multi-link element includes the response timeout subfield and by carrying the response timeout within the response timeout subfield, the TDLS responder is formed of the response timeout and reply with the TDLS discovery response frame within the response timeout.

In combination with some embodiments of the first aspect, in some embodiments, the response timeout is before the EML transition timeout, or the response timeout follows a short inter-frame space (SIFS) after an EML transition delay.

In the above embodiments, the TDLS responder sends the TDLS discovery response frame before the EML transition timeout expires, so that the TDLS initiator effectively discovers the TDLS responder and establishes a TDLS connection with it before entering the EML operation mode. It is also possible to send the TDLS discovery response frame follows a SIFS after the EML transition delay. For example, after a SIFS following the EML transition delay, the TDLS initiator that has not entered the EML operation mode will no longer enter the EML operation mode and can receive the TDLS discovery response frame.

In combination with some embodiments of the first aspect, in some embodiments, the response timeout is before the EML transition timeout, the method further includes:
in a case where the TDLS initiator receives the TDLS discovery response frame within the response timeout and does not receive the second EML operation mode notification frame from the response timeout until the EML transition timeout expires, the TDLS initiator, at the moment when the EML transition timeout expires, entering an EML operation mode according to parameter information of the first EML operation mode notification frame;
   or
in a case where the TDLS initiator receives the TDLS discovery response frame within the response timeout and receives the second EML operation mode notification frame from the response timeout until the EML transition timeout expires, the TDLS initiator, upon receiving the second EML operation mode notification frame, entering an EML operation mode according to parameter information of the second EML operation mode notification frame.

In the above embodiments, it is described how the TDLS initiator determines the parameter information for entering the EML operation mode, based on whether it receives the second EML operation mode notification frame sent by the AP MLD. This improves the operation procedure of the EML operation mode.

In combination with some embodiments of the first aspect, in some embodiments, the response timeout follows a SIFS after the EML transition delay, and the TDLS initiator does not receive the second EML operation mode notification frame from a moment when the AP forwards the TDLS discovery request frame to the TDLS responder until the EML transition timeout expires, the method further includes:
in a case where the TDLS initiator receives the TDLS discovery response frame before the EML transition timeout expires, the TDLS initiator, at the moment when the EML transition timeout expires, entering an EML operation mode according to parameter information of the first EML operation mode notification frame;
   or
in a case where the TDLS initiator dose not receives the a TDLS discovery response frame before the EML transition timeout expires, and receives the TDLS discovery response frame before the response timeout expires, the TDLS initiator, at the moment when the EML transition timeout expires, entering an EML operation mode according to parameter information of the first EML operation mode notification frame.

In the above embodiments, it is described how the TDLS initiator determines the time to enter the EML operation mode, based on whether it receives the TDLS discovery response frame. This improves the operation procedure of the EML operation mode.

In combination with some embodiments of the first aspect, in some embodiments, the response timeout follows a SIFS after an EML transition delay, and the TDLS initiator receives the second EML operation mode notification frame from a moment when the AP forwards the TDLS discovery request frame to the TDLS responder until the EML transition timeout expires, the method further includes:
in a case where the TDLS initiator receives the TDLS discovery response frame sent by the TDLS responder before receiving the second EML operation mode notification frame, the TDLS initiator, upon receiving the second EML operation mode notification frame, entering an EML operation mode according to parameter information of the second EML operation mode notification frame; or
in a case where the TDLS initiator does not receive the TDLS discovery response frame sent by the TDLS responder before receiving the second EML operation mode notification frame, and receives the TDLS discovery response frame before the response timeout expires, the TDLS initiator, upon receiving the second EML operation mode notification frame, entering an EML operation mode according to parameter information of the second EML operation mode notification frame.

In the above embodiments, it is described how the TDLS initiator determines the time to enter the EML operation mode, based on whether the TDLS discovery response frame is received by the TDLS initiator before receiving the second EML operation mode notification frame. This improves the operation procedure of the EML operation mode.

In combination with some embodiments of the first aspect, in some embodiments, in a case where the TDLS initiator does not receive the TDLS discovery response frame sent by the TDLS responder within the response timeout, it is determined that the TDLS responder is not discovered.

In the above embodiments, if the TDLS initiator does not receive the TDLS discovery response frame sent by the TDLS responder within the response timeout (TDLS discovery timeout), it indicates that the TDLS responder is not discovered, and the TDLS connection will not be established, which improves the TDLS discovery process, thereby improving the accuracy and efficiency of TDLS link establishment.

According to a second aspect, the embodiments of the disclosure provide a TDLS communication negotiation method. The method includes:
receiving by an AP a first EML operation mode notification frame sent by a TDLS initiator; and
receiving a TDLS discovery request frame sent by the TDLS initiator and forwarding the TDLS discovery request frame to a TDLS responder before sending a second EML operation mode notification frame to the TDLS initiator or before an EML transition timeout expires,.

In combination with some embodiments of the second aspect, in some embodiments, the TDLS discovery request frame includes a TDLS multi-link element;
a Presence Bitmap subfield of the TDLS multi-link element includes a TDLS initiatior's EML information presence identification field;
the TDLS initiator's EML information presence identification field indicates whether the TDLS discovery request frame includes information on an EML operation mode of the TDLS initiator; and
the EML operation mode indicates whether a connection corresponding to a direct link of the TDLS initiator is an EML connection.

In combination with some embodiments of the second aspect, in some embodiments, the TDLS discovery request frame includes the EML operation mode; and
a Common Info field of the TDLS Multi-Link element includes an EML Control field, and the EML Control field carries the EML operation mode.

In combination with some embodiments of the second aspect, in some embodiments, the TDLS discovery request frame includes:
a response timeout for the TDLS responder to send a TDLS discovery response frame; and
the response timeout is before the EML transition timeout, or the response timeout follows a SIFS after an EML transition delay.

In combination with some embodiments of the second aspect, in some embodiments, after forwarding by the AP the TDLS discovery request frame to the TDLS responder, the method further includes:
in a case where the response timeout is before the EML transition timeout, not sending by the AP the second EML operation mode notification frame to the TDLS initiator from a moment when the AP forwards the TDLS discovery request frame to the TDLS responder until the response timeout expires;
   or
in a case where the response timeout follows a SIFS after the EML transition delay, sending or not sending by the AP the second EML operation mode notification frame to the TDLS initiator from a moment when the AP forwards the TDLS discovery request frame to the TDLS responder until the EML transition timeout expires.

According to a third aspect, the embodiments of the disclosure provide a TDLS communication negotiation method. The method includes:
receiving by a TDLS responder a TDLS discovery request frame forwarded by an AP;
in which the TDLS discovery request frame is received by the AP from a TDLS initiator before sending a second EML operation mode notification frame to the TDLS initiator or before an EML transition timeout expires and then forwarded to the TDLS responder; and
the second EML operation mode notification frame is used to respond to a first EML operation mode notification frame sent by the TDLS initiator.

In combination with some embodiments of the third aspect, in some embodiments, the TDLS discovery request frame includes a TDLS multi-link element;
a Presence Bitmap subfield of the TDLS multi-link element includes a TDLS initiator s EML information presence identification field;
the TDLS initiator s EML information presence identification field indicates whether the TDLS discovery request frame includes information on an EML operation mode of the TDLS initiator; and
the EML operation mode indicates whether a connection corresponding to a direct link of the TDLS initiator is an EML connection.

In combination with some embodiments of the third aspect, in some embodiments, the TDLS discovery request frame includes the information on the EML operation mode; and
a Common Info field of the TDLS multi-link element includes an EML Control field, and the EML Control field carries the information on the EML operation mode.

In combination with some embodiments of the third aspect, in some embodiments, the TDLS discovery request frame includes:
a response timeout for the TDLS responder to send a TDLS discovery response frame; and
the response timeout is before the EML transition timeout, or the response timeout follows a SIFS after an EML transition delay.

In combination with some embodiments of the third aspect, in some embodiments, the response timeout is before the EML transition timeout, the AP does not send the second EML operation mode notification frame to the TDLS initiator from a moment when the AP forwards the TDLS discovery request frame to the TDLS responder until the response timeout expires;
or
the response timeout follows a SIFS after the EML transition delay, the AP sends or does not send the second EML operation mode notification frame to the TDLS initiator from a moment when the AP forwards the TDLS discovery request frame to the TDLS responder until the EML transition timeout expires.

In combination with some embodiments of the third aspect, in some embodiments, the response timeout is before the EML transition timeout, the method further includes:
sending the TDLS discovery response frame to the TDLS initiator within the response timeout.

In combination with some embodiments of the third aspect, in some embodiments, the response timeout follows a SIFS after the EML transition delay, the method further includes:
sending the TDLS discovery response frame to the TDLS initiator before the EML transition timeout expires;
   or
not sending the TDLS discovery response frame to the TDLS initiator before the EML transition timeout expires, and sending the TDLS discovery response frame to the TDLS initiator from a moment when data exchange among other EMLSR links or EML multiple radio (EMLMR) links receiving an initial control frame ends until the response timeout expires.

According to a fourth aspect, the embodiments of the disclosure provide a TDLS initiator. The TDLS initiator includes at least one of a first sending module or a second sending module. The TDLS initiator is used to implement optional implementations of the first aspect.

According to a fifth aspect, the embodiments of the disclosure provide an AP. The AP includes at least one of a first receiving module or a forwarding module. The AP is used to implement optional implementations of the second aspect.

According to a sixth aspect, the embodiments of the disclosure provide a TDLS responder. The TDLS responder includes a second receiving module. The TDLS responder is used to implement optional implementations of the third aspect.

According to a seventh aspect, the embodiments of the disclosure provide a TDLS initiator. The TDLS initiator includes:
one or more processors;
in which the TDLS initiator is used to implement optional implementations of the first aspect.

According to an eighth aspect, the embodiments of the disclosure provide an AP. The AP includes:
one or more processors;
in which the AP is used to implement optional implementations of the second aspect.

According to a ninth aspect, the embodiments of the disclosure provide a TDLS responder. The TDLS initiator includes:
one or more processors;
in which the TDLS responder is used to implement optional implementations of the third aspect.

According to a tenth aspect, the embodiments of the disclosure provide a communication system. The communication system includes a TDLS initiator, an AP and a TDLS responder. The TDLS initiator is used to implement optional implementations of the first aspect, the AP is used to implement optional implementations of the second aspect, and the TDLS responder is used to implement optional implementations of the third aspect.

According to an eleventh aspect, the embodiments of the disclosure provide a storage medium for storing instructions. When the instructions are executed by a communication device, the communication device is caused to implement optional implementations of the first aspect, the second aspect and the third aspect.

According to a twelfth aspect, the embodiments of the disclosure provide a program product. When the program product is executed by a communication device, the communication device is caused to implement methods described by optional implementations of the first aspect, the second aspect and the third aspect.

According to a thirteenth aspect, the embodiments of the disclosure provide a computer program. When the computer program is executed by a computer, the computer is caused to implement methods described by optional implementations of the first aspect, the second aspect and the third aspect.

According to a fourteenth aspect, the embodiments of the disclosure provide a chip or chip system. The chip or chip system includes a processing circuit, which is configured to implement methods described by optional implementations of the first aspect and the second aspect.

It is understood that the above TDLS initiator, AP, TDLS responder, communication system, storage medium, program product, computer program, chip or chip system are all used to implement the methods of the embodiments of the disclosure. Therefore, for the beneficial effects they achieve reference can be made to the beneficial effects in the corresponding methods, which will not be repeated here.

The embodiments of the disclosure provide a TDLS communication negotiation method, apparatus and communication system. In some embodiments, "TDLS communication negotiation method", "signal transmission method" and "radio frame transmission method" are interchangeable, and "information processing system" and "communication system" are also interchangeable.

Not all of the embodiments of the disclosure are provided in the disclosure, only some embodiments are illustrated below and they are not taken as specific limitations on the protection scope of the disclosure. Without contradiction, in an embodiment, each step may be implemented as an independent embodiment, and steps may be combined arbitrarily. For example, any solution after removing some steps in an embodiment may also be implemented as an independent embodiment. The steps in an embodiment may be performed in different orders, and optional implementations of an embodiment may be combined arbitrarily. In addition, the embodiments of the disclosure may also be combined arbitrarily. For example, some or all the steps of different embodiments may be combined arbitrarily, and each embodiment may be arbitrarily combined with optional implementations of other embodiments.

In the embodiments of the disclosure, unless there are special explanations and/or logical conflicts, terms and/or descriptions of the embodiments are consistent and can refer to each other. Technical features in different embodiments may be combined as new embodiments according to their inherent logical relations.

Terms used in the embodiments of the disclosure are only for the purpose of describing specific embodiments, and are not considered as limitations to the disclosure.

In the embodiments of the disclosure, "a plurality of' refers to "two or more".

In some embodiments, terms "at least one of", "one or more", "a plurality of" and "multiple" are interchangeable.

In some embodiments, descriptions such as "at least one of A or B", "A and/or B", "in one case A, while in another case B", and "in response to one case A, while in response to another case B" may be used in the following technical solutions depending on the specific conditions: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depending on the specific conditions: in some embodiments, A is executed independent of B; in some embodiments, B is executed independent of A; and in some embodiments, A and B are selectively executed. The same applies when there are more branches such as A, B and C.

The prefixes such as "first" and "second" in the embodiments of the disclosure are used only for distinguishing different objects. The prefix is not intended to limit the position, order, priority, quantity or content of a certain object. The description of the object can refer to related contexts in the descriptions of the claims and the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not limit a quantity of the object, and it is possible that there are one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, terms "less than", "less than or equal to", "lower than", "lower than or equal to", "smaller than", "smaller than or equal to", "no greater than", "no higher than" and "below" are interchangeable.

In some embodiments, the device/apparatus may be interpreted as physical or virtual, and its name is not limited to those listed in the embodiments. It may also be referred to as "equipment", "device", "circuit", "network element", "node", "function", "unit", "section", "system", "network", "chip", "chip system", "entity" and "object" when appropriate.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

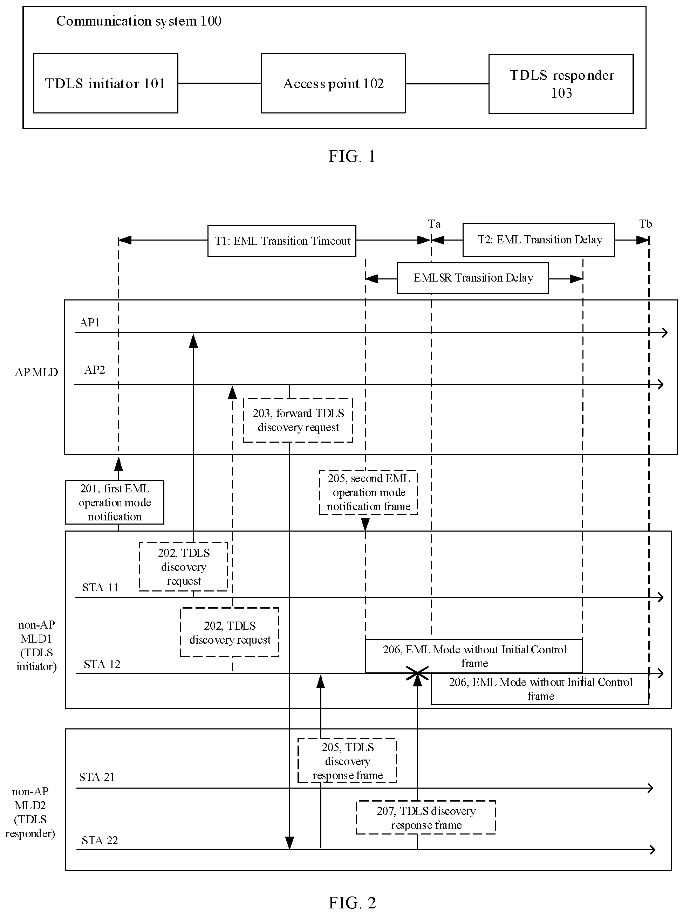

FIG. 1 is a schematic structural diagram of a communication system illustrated according to an embodiment of the disclosure.

As illustrated in FIG. 1, the communication system 100 includes a TDLS initiator 101, a TDLS responder 10 and an AP 102. The TDLS initiator 101 and the TDLS responder 103 may be STAs.

In some embodiments, the TDLS initiator 101 and the TDLS responder 103 include, for example, a wireless communication chip, a wireless sensor or a wireless communication terminal that supports Wi-Fi communication functions. Optionally, the wireless communication terminal may be, for example, at least one of a mobile phone, a wearable device, an Internet of Things (IoT) device that supports Wi-Fi communication functions, a car with Wi-Fi communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited herein.

In detail, the TDLS initiator 101 and the TDLS responder103 may be terminals or network devices with Wi-Fi chips. Optionally, the TDLS initiator 101 and TDLS responder103 support various wireless local area network (WLAN) standards such as 802.11ax, 802.11be, 802.11ac, 802.11n, 802.11g, 802.11b, 802.11a, 802.11bf and 802.11bn, and they also support next generation 802.11 protocols, which is not limited herein.

In some embodiments, the AP 102 is an AP where a mobile terminal enters a wired network. The AP is equivalent to a bridge connecting a wired network and a wireless network. Its main function is to connect all clients of the wireless network together, and then connect the wireless network to the Ethernet. In detail, the AP may be a terminal or a network device with a Wi-Fi chip. Optionally, the AP supports various WLAN standards such as 802.11ax, 802.11be, 802.11ac, 802.11n, 802.11g, 802.11b, 802.11a, 802.11bf and 802.11bn, and it also support next generation 802.11 protocols, which is not limited herein.

Optionally, in the embodiments of the disclosure, the AP and the STA may be MLDs, such as an AP MLD and a non-AP MLD. The AP MLD represents an AP supporting multi-link communication functions, and the non-AP MLD represents an STA supporting multi-link communication functions.

It is understandable that to clearly illustrate the technical solution of the embodiments of the disclosure, its applicable communication system is introduced first in the embodiments of the disclosure, which does not constitute as a limitation to the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system shown in FIG. 1, which is not limited herein. The entities shown in FIG. 1 are examples. The communication system may include all or part of the entities in FIG. 1, and may also include entities not shown in FIG. 1. The quantity and form of each entity are arbitrary, and these entities can be physical or virtual. The connection relationships between these entities are illustrated as examples. For example, the entities may or may not be connected, and the entities may be connected by any means, e.g., directly or indirectly, or in a wired manner or wirelessly.

The embodiments of the disclosure are applied to WLANs, such as a WLAN adopt 802.11 series protocols. For a WLAN, basic service set (BSS) is the basic component of the WLAN. A BSS network is composed of STAs with certain associations within a specific coverage area. One case of association is that STAs communicate directly with each other in an ad hoc network, which is called independent BSS (IBSS). Another more common case is that in a BSS network, only one STA for full-time management of BSS is called AP, and other STAs in the network are associated with it. These other STAs in the BSS network are called terminals or non-AP STAs. The terminals and the non-AP STAs are collectively called STAs. There is no need to distinguish APs and non-AP STAs when describing STAs. In the same BSS network, due to factors such as distance and transmit power, one STA cannot detect other STAs far away from it, and they are each other's hidden nodes.

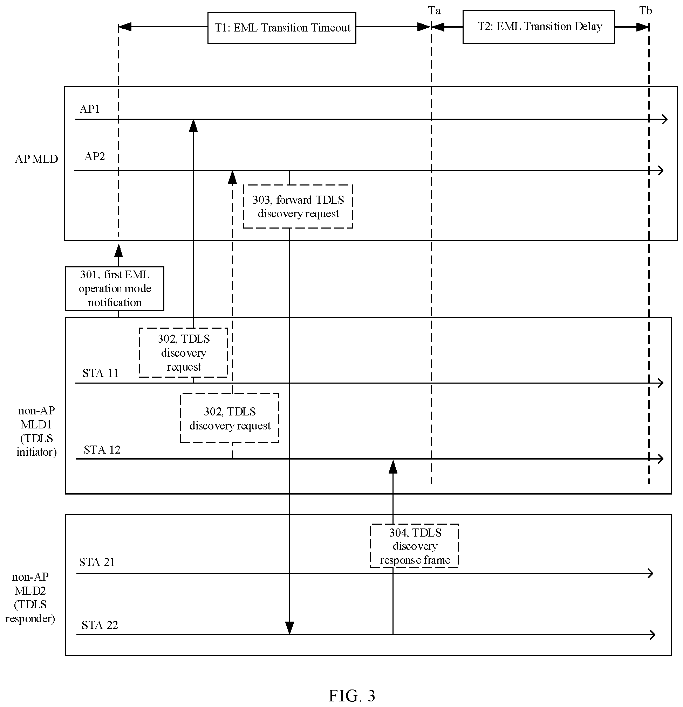

FIGs. 2 and 3 are interactive schematic diagrams of a TDLS communication negotiation method illustrated according to the embodiments of the disclosure. As illustrated in FIGs. 2 and 3, the above method includes the following steps.

At step 201, a TDLS initiator sends a first EML operation mode notification frame to an AP.

At steps 202-203, a TDLS initiator sends a TDLS discovery request frame to a TDLS responder via the AP before receiving a second EML operation mode notification frame sent by the AP or before an EML transition timeout expires.

The EML mode includes an EMLSR mode and an EMLMR mode. When a non-AP MLD is in an EML mode, it only monitors channels and receives an initial control frame sent by an AP MLD in the form of an orthogonal frequency division multiplexing physical layer protocol data unit (PPDU) or a non-high throughput repetitive PPDU. The initial control frame is, for example, a multi-user request transmission trigger frame or a buffer status report polling trigger frame.

In detail, after the non-AP MLD requests the AP MLD associated with it to enter the EML mode, a non-AP STA on the link belonging to the non-AP MLD and identified with the EML mode enters an active mode or an awake mode to monitor and receive the initial control frame sent by the AP MLD. While a non-AP STA on the link that is not identified with the EML mode enters a doze mode and cannot send or receive non-wake-up radio (WUR) PPDUs.

TDLS links may be established between MLDs, eliminating the need for APs to enable P2P communications between STAs and avoiding delays caused by network congestion. However, the premise for establishing TDLS links is that the TDLS initiator discovers the TDLS device (i.e., TDLS responder) within its BSS. The discovery process mainly includes the following three stages:
(1) the TDLS initiator sends a TDLS discovery request frame to its associated AP;
(2) the AP forwards the TDLS discovery request frame to the TDLS responder; and
(3) the TDLS responder sends a TDLS discovery response frame to the TDLS initiator via a direct link (DL).

The TDLS discovery request frame is sent via the DL. If the TDLS initiator is a non-AP MLD, it sends the TDLS discovery request frame and enters the EML mode before receiving the TDLS discovery response frame. However, the following two cases may occur.

Case 1. If a connection (working connection) corresponding to the DL of the non-AP MLD initiator is not an EML connection, its affiliated non-AP STA under the connection is in the doze mode.

Case 2. The connection corresponding to the non-AP MLD initiator is an EML connection, but the initial control frame sent by the AP MLD is not received. As illustrated in steps 401 and 402 in FIG. 2, the connection corresponding to the non-AP MLD initiator is an EML connection, and the associated non-AP STA enters the active state or awake mode to monitor and receive the initial control frame sent by the AP MLD. However, if the initial control frame sent by the AP MLD is not received, the non-AP MLD initiator cannot enter a working state and cannot receive the TDLS discovery response frame sent by the TDLS responder.

The above two cases both cause the TDLS initiator to be unable to receive the TDLS discovery response frame sent by the TDLS responder, thus causing the TDLS initiator to mistakenly determine that the TDLS responder does not exist, resulting in the inability to establish the TDLS connection. Therefore, in this embodiment of the disclosure, step 202 is executed after the TDLS initiator sends the first EML operation mode notification frame to the AP in step 201, and the AP executes step 203.

In detail, in FIGs. 2 and 3, the AP MLD includes an AP1 and an AP2. The non-AP MLD1 is the TDLS initiator, including an STA11 and an STA12. The non-AP MLD2 is the TDLS responder, including an STA21 and an STA22. T1 represents EML Transition Timeout, Ta represents a time point of EML Transition Timeout, T2 represents EML Transition Delay (EMLSR Transition Delay), and Tb represents a time point of EML Transition Delay.

Scenario 1 is illustrated in FIG. 2. At step 201, the TDLS initiator sends a first EML operation mode notification frame to the AP.

At step 202, the TDLS initiator sends a TDLS discovery request frame to the AP before receiving a second EML operation mode notification frame sent by the AP (AP MLD).

At step 203, the AP forwards the TDLS discovery request frame to the TDLS responder.

At step 204, the TDLS responder replies a TDLS discovery response frame to the TDLS initiator through a DL.

At step 205, the AP sends the second EML operation mode notification frame to the TDLS initiator.

Before the EML operation mode notification process is completed, i.e., before step 205, the TDLS initiator has already sent the TDLS discovery request frame to the TDLS responder. If a TDLS responder exists, the TDLS responder will reply a TDLS discovery response frame to the TDLS initiator. That is, the TDLS responder will reply the TDLS discovery response frame to the TDLS initiator before the TDLS initiator enters the EML operation mode. This allows the TDLS initiator to effectively discover the TDLS responder and establish the TDLS connection before entering the EML operation mode.

For the Case 1, if the connection corresponding to the DL of the TDLS initiator is not an EML connection, its affiliated non-AP STA under the connection may enter the doze mode after the TDLS initiator enters the EML operation mode. At step 204, the TDLS responder has already sent the TDLS discovery response frame to the TDLS initiator via the DL, so the TDLS initiator can receive the TDLS discovery response frame to prevent the TDLS initiator from misjudging that the TDLS responder does not exist.

For the Case 2, the connection corresponding to the non-AP MLD initiator is an EML connection. After the TDLS initiator enters the EML operation mode, the STA21 or the STA22 monitors and receives the initial control frame sent by the AP MLD. Even if the initial control frame sent by the AP MLD is not received, because the TDLS discovery response frame sent by TDLS responder has been received, the TDLS initiator will not misjudge that the TDLS responder does not exist.

Scenario 2 is illustrated in FIG. 3.

At step 301, the TDLS initiator sends a first EML operation mode notification frame to the AP.

At step 302, before the EML transition timeout expires (i.e., before Ta), the TDLS initiator sends a TDLS discovery request frame to the AP.

At step 303, the AP forwards the TDLS discovery request frame to the TDLS responder.

At step 304, the TDLS responder replies a TDLS discovery response frame to the TDLS initiator via a DL.

After the EML transition timeout expires, the TDLS initiator may enter the EML operation mode.

In this way, before the EML transition timeout expires (i.e., before Ta), the TDLS initiator has sent the TDLS discovery request frame to the TDLS responder, so that if there is a TDLS responder, the TDLS responder will reply the TDLS discovery response frame to the TDLS initiator. That is, the TDLS responder will reply the TDLS discovery response frame to the TDLS initiator before the EML transition timeout expires or before the TDLS initiator enters the EML operation mode. Therefore, the TDLS initiator can effectively discover the TDLS responder and establish the TDLS connection with it before entering the EML operation mode.

For the Case 1, if the connection corresponding to the DL of the TDLS initiator is not an EML connection, its affiliated non-AP STA under the connection may enter the doze mode after the TDLS initiator enters the EML operation mode. At step 304, the TDLS responder has already sent the TDLS discovery response frame to the TDLS initiator through the DL, so the TDLS initiator can receive the TDLS discovery request frame, thus preventing the TDLS initiator from misjudging that the TDLS responder does not exist.

For the Case 2, the connection corresponding to the TDLS initiator is an EML connection. After the TDLS initiator enters the EML operation mode, the STA21 or the STA22 monitors and receives the initial control frame sent by the AP MLD. Even if the initial control frame sent by the AP MLD is not received, because the TDLS discovery response frame sent by the TDLS responder has already been received, the TDLS initiator will not misjudge that the TDLS responder does not exist.

In this embodiment of the disclosure, the TDLS initiator sends the TDLS discovery request frame to the TDLS responder via the AP before receiving the second EML operation mode notification frame sent by the AP or before the EML transition timeout, to ensure that the TDLS responder replies the TDLS discovery response frame before the TDLS initiator enters the EML operation mode. Therefore, before entering the EML operation mode, the TDLS initiator can effectively discover the TDLS responder and establish the TDLS connection with it, which improves the TDLS discovery process, thereby improving the accuracy and efficiency of TDLS link establishment.

In some embodiments, the TDLS discovery request frame includes at least one of:
a response timeout for the TDLS responder to send a TDLS discovery response frame; or
information on an EML operation mode of the TDLS initiator, in which the EML operation mode indicates whether a connection corresponding to a DL of the TDLS initiator is an EML connection.

The TDLS discovery request frame carries the response timeout of the TDLS discovery response frame sent by the TDLS responder to indicate the TDLS responder to send the TDLS discovery response frame within the response timeout, so that the TDLS initiator can effectively discover the TDLS responder. Optionally, the response timeout may be before the EML transition timeout or before the AP sends the second EML operation mode notification frame.

The TDLS discovery request frame may also carry the information on the EML operation mode of the TDLS initiator, which is used to indicate whether a connection corresponding to a DL of the TDLS initiator is an EML connection.

In some embodiments, the TDLS discovery request frame includes a TDLS multi-link element;
a Multi-Link Control field of the TDLS multi-link element includes a Presence Bitmap subfield; and
the Presence Bitmap subfield includes a response timeout presence identification bit, in which the response timeout presence identification bit indicates whether a Common Info field of the TDLS multi-link element includes a TDLS discovery response timeout subfield, and the TDLS discovery response timeout subfield is used to carry the response timeout.

For example, when the response timeout presence identification bit is set to 1, it indicates that the TDLS discovery request frame includes the response timeout. That is, the TDLS discovery response timeout subfield is used to carry the response timeout. When the response timeout presence identification bit is set to 0, it indicates that the TDLS discovery request frame does not include the response timeout.

In some embodiments, the response timeout is before the EML transition timeout, or follows a SIFS after the EML transition delay.

The TDLS responder sends the TDLS discovery response frame before the EML transition timeout expires, so that the TDLS initiator can effectively discover the TDLS responder and establish the TDLS connection with it before entering the EML operation mode. It is also possible to send the TDLS discovery response frame after a SIFS following the EML transition delay. For example, after a SIFS following the EML transition delay, the TDLS initiator that has not entered the EML operation mode will not enter the EML operation mode, so that it can receive the TDLS discovery response frame.

In some embodiments, the TDLS discovery request frame includes the information on the EML operation mode.

The Common Info field of the TDLS multi-link element includes an EML Control field, and the EML Control field carries the information on the EML operation mode.

The AP forwards the TDLS discovery request frame to the TDLS responder upon receiving the TDLS discovery request frame.

On the basis of the received TDLS discovery request frame, the TDLS discovery request frame sent to the TDLS responder may also include the information on the EML operation mode.

Optionally, in the TDLS discovery request frame, the TDLS multi-link element should include but not limited to the following contents: the Multi-Link Control field, including the Presence Bitmap subfield; the Presence Bitmap subfield, including an EML operation mode information presence identification field. When the EML operation mode information presence identification field is set to 1, the Common Info field of the TDLS multi-link element includes the EML Control field, which is used to identify the EML operation mode information (EML status information) of the TDLS initiator.

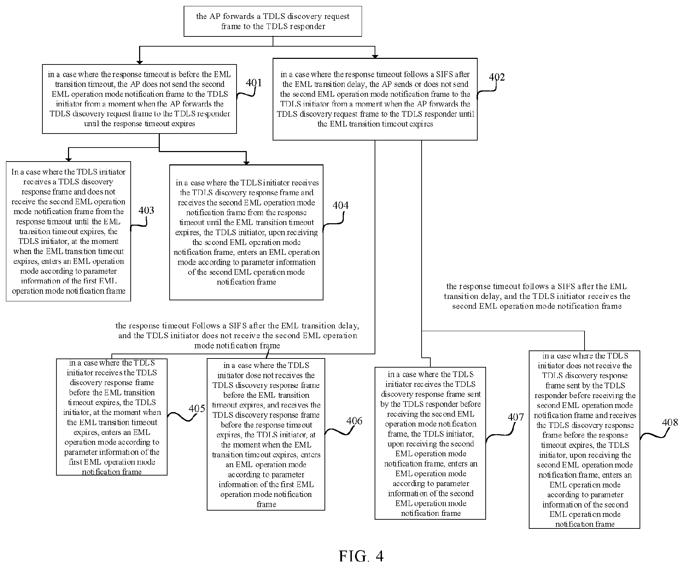

In some embodiments, as illustrated in FIG. 4, after step 203 or 303, the AP also performs step 401 or 402.

At step 401, in a case where the response timeout is before the EML transition timeout, the AP does not send the second EML operation mode notification frame to the TDLS initiator from a moment when the AP forwards the TDLS discovery request frame to the TDLS responder until the response timeout expires.

If the response timeout is before the EML transition timeout, the AP may not send the second EML operation mode notification frame to the TDLS initiator from the time of step 203 or 303 until the response timeout expires, so as to prevent the TDLS initiator from entering the EML operation mode before the TDLS responder sends the TDLS discovery response frame.

At step 402, in a case where the response timeout follows a SIFS after the EML transition delay, the AP sends or does not send the second EML operation mode notification frame to the TDLS initiator from a moment when the AP forwards the TDLS discovery request frame to the TDLS responder until the EML transition timeout expires.

If the response timeout is one SIFS after the EML transition delay, the AP may send or may not send the second EML operation mode notification frame to the TDLS initiator from a moment of step 203 or 303 until the EML transition timeout expires, thereby not affecting the TDLS responder to send the TDLS discovery response frame.

In some embodiments, as illustrated in FIG. 4, for step 401, the TDLS initiator performs step 403 or 404.

At step 403, in a case where the TDLS initiator receives a TDLS discovery response frame within the response timeout and does not receive the second EML operation mode notification frame from the response timeout until the EML transition timeout expires, the TDLS initiator, at the moment when the EML transition timeout expires, enters an EML operation mode according to parameter information of the first EML operation mode notification frame.

The TDLS responder sends the TDLS discovery response frame to the TDLS initiator within the response timeout. If the AP MLD fails to send the second EML operation mode notification frame to the TDLS initiator from the response timeout until the EML transition timeout expires, the TDLS initiator will enter the corresponding EML operation mode according to the parameter information of the first EML operation mode notification frame after the EML transition timeout expires.

At step 404, in a case where the TDLS initiator receives the TDLS discovery response frame within the response timeout and receives the second EML operation mode notification frame from the response timeout until the EML transition timeout expires, the TDLS initiator, upon receiving the second EML operation mode notification frame, enters an EML operation mode according to parameter information of the second EML operation mode notification frame.

The TDLS responder sends the TDLS discovery response frame to the TDLS initiator within the response timeout. From the response timeout until the EML transition timeout expires, the AP MLD sends the second EML operation mode notification frame to the TDLS initiator, and the TDLS initiator, upon receiving the second EML operation mode notification frame, enters the EML operation mode according to the parameter information of the second EML operation mode notification frame.

In some embodiments, as illustrated in FIG. 4, for step 402, the response timeout follows a SIFS after the EML transition delay, and the TDLS initiator does not receive the second EML operation mode notification frame from the moment when the AP forwards the TDLS discovery request frame to the TDLS responder until the EML transition timeout expires, and then it performs step 405 or 406.

At step 405, in a case where the TDLS initiator receives the TDLS discovery response frame before the EML transition timeout expires, the TDLS initiator, at the moment when the EML transition timeout expires, enters an EML operation mode according to parameter information of the first EML operation mode notification frame.

The TDLS responder sends the TDLS discovery response frame to the TDLS initiator before the EML transition timeout expires. The TDLS initiator enters the EML operation mode according to the parameter information of the first EML operation mode notification frame after the EML transition timeout expires.

At step 406, in a case where the TDLS initiator dose not receives the TDLS discovery response frame before the EML transition timeout expires, and receives the TDLS discovery response frame before the response timeout expires, the TDLS initiator, at the moment when the EML transition timeout expires, enters an EML operation mode according to parameter information of the first EML operation mode notification frame.

If the TDLS responder does not send a TDLS discovery response frame to the TDLS initiator before the EML transition timeout expires, the TDLS responder sends the TDLS discovery response frame to the TDLS initiator from a moment when data exchange among other EMLSR links or EMLMR links receiving an initial control frame ends until the response timeout expires. The TDLS initiator enters the EML operation mode according to the parameter information of the first EML operation mode notification frame after the EML transition timeout expires.

In some embodiments, as illustrated in FIG. 4, for step 402, the response timeout follows a SIFS after the EML transition delay, and the TDLS initiator receives the second EML operation mode notification frame from the moment when the access point forwards the TDLS discovery request frame to the TDLS responder until the EML transition timeout expires,, and it performs step 407 or 408.

At step 407, in a case where the TDLS initiator receives the TDLS discovery response frame sent by the TDLS responder before receiving the second EML operation mode notification frame, the TDLS initiator, upon receiving the second EML operation mode notification frame, enters an EML operation mode according to parameter information of the second EML operation mode notification frame.

Before the AP MLD sends the second EML operation mode notification frame to the TDLS initiator, the TDLS responder sends the TDLS discovery response frame to the TDLS initiator. After receiving the second EML operation mode notification frame sent by the AP MLD, the TDLS initiator enters the EML operation mode according to the parameter information of the received second EML operation mode notification frame.

At step 408, in a case where the TDLS initiator does not receive the TDLS discovery response frame sent by the TDLS responder before receiving the second EML operation mode notification frame and receives the TDLS discovery response frame before the response timeout expires, the TDLS initiator, upon receiving the second EML operation mode notification frame, enters an EML operation mode according to parameter information of the second EML operation mode notification frame.

If the TDLS responder does not send the TDLS discovery response frame to the TDLS initiator before the AP MLD sends the second EML operation mode notification frame to the TDLS initiator, the TDLS responder should send the TDLS discovery response frame to the TDLS initiator from the moment when data exchange among other EMLSR links or EMLMR links receiving an initial control frame ends until the response timeout expires. The TDLS initiator enters the corresponding EML operation mode according to the information carried in the received EML operation mode notification frame after receiving the second EML operation mode notification frame sent by the AP MLD.

In some embodiments, in the method,
in a case where the TDLS initiator does not receive the TDLS discovery response frame sent by the TDLS responder within the response timeout, it is determined that the TDLS responder is not discovered.

If the TDLS initiator does not receive the TDLS discovery response frame sent by the TDLS responder within the response timeout (the TDLS discovery timeout), it indicates that the TDLS responder is not discovered.

In some embodiments, the name of "information" is not limited to those listed in the embodiments. Terms "information", "message", "signal", "signaling", "report", "configuration", "indication", "instruction", "command", "channel", "parameter", "domain", "field", "symbol", "codepoint", "bit", "data", "program" and "chip" are interchangeable.

In some embodiments, terms "time instant", "time point", "time" and "time position" are interchangeable, and terms "duration", "time period", "time window", "window" and "time" are interchangeable.

In some embodiments, terms "wireless access scheme" and "waveform" are interchangeable.

In some embodiments, terms "certain", "predetermined", "pre-set", "set", "indicated", "a specific", "any" and "first" are interchangeable. That is, "certain A", "predetermined A", "pre-set A", "set A", "indicated A", "a specific A", "any A" and "first A" may be interpreted as "A pre-specified in a protocol", "A obtained through setting, configuration or indication", "certain A", "a specific A", "any A" or "first A", which is not limited herein.

In some embodiments, a judgment or decision can be made based on a 1-bit value (0 or 1) or a boolean ("true" or "false"), or through value comparison (for example, comparing a value with a preset value), which is not limited herein.

In some embodiments, "not expecting to receive" may be interpreted as "not receiving on time domain resources and/or frequency domain resources" or "not performing subsequent processing on data or the like after receiving it", and "not expecting to send" may be interpreted as "not sending" or "sending but not expecting a reply".

The TDLS communication negotiation method of the embodiments of the disclosure includes at least one of the above steps and embodiments. For example, step 201 may be implemented as an independent embodiment, step 202 may be implemented as an independent embodiment, step 203 may be implemented as an independent embodiment, step 204 may be implemented as an independent embodiment, step 205 may be implemented as an independent embodiment, step 301 may be implemented as an independent embodiment, step 302 may be implemented as an independent embodiment, step 303 may be implemented as an independent embodiment, step 304 may be implemented as an independent embodiment, steps 401-408 may be implemented as an independent embodiment, which is not limited herein.

The combination of step 201and step 202 may be implemented as an independent embodiment, the combination of step 202 and step 203 may be implemented as an independent embodiment, the combination of step 203 and step 204 may be implemented as an independent embodiment, the combination of step 301 and step 302 may be implemented as an independent embodiment, the combination of step 302 and step 303 may be implemented as an independent embodiment, the combination of step 303 and step 304 may be implemented as an independent embodiment, the combination of step 401 and step 403 may be implemented as an independent embodiment, the combination of step 401 and step 404 may be implemented as an independent embodiment, the combination of step 402 and step 405 may be implemented as an independent embodiment, the combination of step 402 and step 406 may be implemented as an independent embodiment, the combination of step 402 and step 407 may be implemented as an independent embodiment, and the combination of step 402 and step 408 may be implemented as an independent embodiment, which is not limited herein.

In some embodiments, reference can be made to other optional implementations described before or after the corresponding descriptions of FIGs. 2-4.

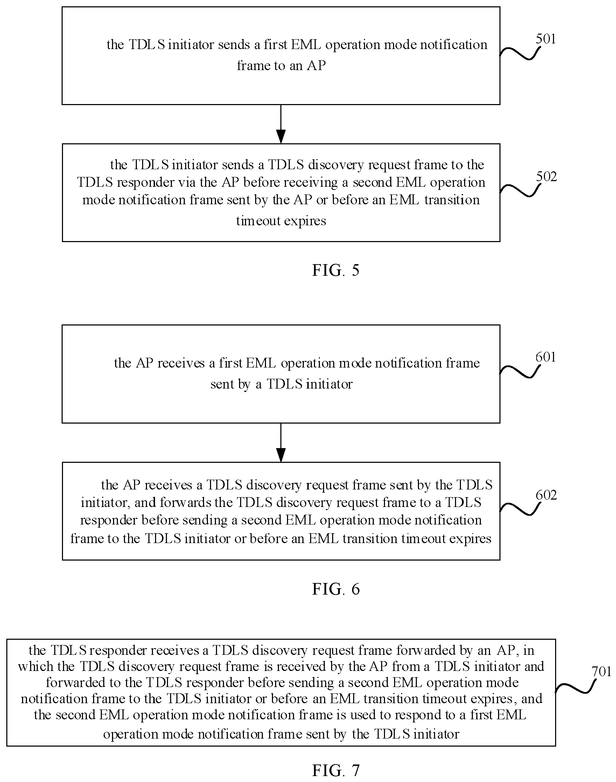

FIG. 5 is a flowchart 1 of a TDLS communication negotiation method provided according to an embodiment of the disclosure.

As illustrated in FIG. 5, the method is applied to a TDLS initiator, and includes the following steps.

At step 501, the TDLS initiator sends a first EML operation mode notification frame to an AP.

At step 502, the TDLS initiator sends a TDLS discovery request frame to the TDLS responder via the AP before receiving a second EML operation mode notification frame sent by the AP or before an EML transition timeout expires.

Optionally, in the embodiments of the disclosure, the TDLS discovery request frame includes at least one of:
a response timeout for the TDLS responder to send a TDLS discovery response frame; or
information on an EML operation mode of the TDLS initiator, in which the EML operation mode indicates whether a connection corresponding to a DL of the TDLS initiator is an EML connection.

Optionally, in the embodiments of the disclosure, the TDLS discovery request frame includes a TDLS multi-link element;
a Multi-Link Control field of the TDLS multi-link element includes a Presence Bitmap subfield; and
the Presence Bitmap subfield includes a response timeout presence identification bit, in which the response timeout presence identification bit indicates whether a Common Info field of the TDLS Multi-Link element includes a TDLS discovery response timeout subfield, and the TDLS discovery response timeout subfield is used to carry the response timeout.

Optionally, in the embodiments of the disclosure, the response timeout is before the EML transition timeout, or the response timeout is follows a SIFS after an EML transition delay.

Optionally, in the embodiments of the disclosure, the response timeout is before the EML transition timeout, the method further includes:
Step 503: in a case where the TDLS initiator receives the TDLS discovery response frame within the response timeout and does not receive the second EML operation mode notification frame from the response timeout until the EML transition timeout expires, the TDLS initiator, at the moment when the EML transition timeout expires, entering an EML operation mode according to parameter information of the first EML operation mode notification frame;
   or
Step 504: in a case where the TDLS initiator receives the TDLS discovery response frame within the response timeout and receives the second EML operation mode notification frame from the response timeout until the EML transition timeout expires, the TDLS initiator, upon receiving the second EML operation mode notification frame, entering an EML operation mode according to parameter information of the second EML operation mode notification frame.

Optionally, in the embodiments of the disclosure, the response timeout follows a SIFS after the EML transition delay, and the TDLS initiator does not receive the second EML operation mode notification frame from a moment when the AP forwards the TDLS discovery request frame to the TDLS responder until the EML transition timeout expires, the method further includes:
Step 505: in a case where the TDLS initiator receives the TDLS discovery response frame before the EML transition timeout expires, the TDLS initiator, at the moment when the EML transition timeout expires, entering an EML operation mode according to parameter information of the first EML operation mode notification frame;
   or
Step 506: in a case where the TDLS initiator dose not receives the TDLS discovery response frame before the EML transition timeout expires, and receives the TDLS discovery response frame before the response timeout expires, the TDLS initiator, at the moment when the EML transition timeout expires, entering an EML operation mode according to parameter information of the first EML operation mode notification frame.

Optionally, in the embodiments of the disclosure, the response timeout follows a SIFS after the EML transition delay, and the TDLS initiator receives the second EML operation mode notification frame from a moment when the AP forwards the TDLS discovery request frame to the TDLS responder until the EML transition timeout expires, the method further includes:
Step 507: in a case where the TDLS initiator receives the TDLS discovery response frame sent by the TDLS responder before the second EML operation mode notification frame, the TDLS initiator, upon receiving the second EML operation mode notification frame, entering an EML operation mode according to parameter information of the second EML operation mode notification frame; or
Step 508: in a case where the TDLS initiator does not receive the TDLS discovery response frame sent by the TDLS responder before receiving the second EML operation mode notification frame, and receives the TDLS discovery response frame before the response timeout expires, the TDLS initiator, upon receiving the second EML operation mode notification frame, entering an EML operation mode according to parameter information of the second EML operation mode notification frame.

Optionally, in the embodiments of the disclosure, the method further includes:
Step 509: in a case where the TDLS initiator does not receive the TDLS discovery response frame sent by the TDLS responder within the response timeout, determining that the TDLS responder is not discovered.

The TDLS communication negotiation method of the embodiments of the disclosure includes at least one of the above steps and embodiments. For example, step 501 may be implemented as an independent embodiment, step 502 may be implemented as an independent embodiment, step 503 may be implemented as an independent embodiment, step 504 may be implemented as an independent embodiment, steps 505-509 may be implemented as an independent embodiment, and steps 501 and 502 may be implemented as an independent embodiment, which is not limited herein.

In some embodiments, reference can be made to other optional implementations described before or after the description corresponding to FIG. 3.

FIG. 6 is a flowchart 2 of a TDLS communication negotiation method provided according to an embodiment of the disclosure.

As illustrated in FIG. 6, the method is applied to an AP, and includes the following steps.

At step 601, the AP receives a first EML operation mode notification frame sent by a TDLS initiator.

At step 602, the AP receives a TDLS discovery request frame sent by the TDLS initiator, and forwards the TDLS discovery request frame to a TDLS responder before sending a second EML operation mode notification frame to the TDLS initiator or before an EML transition timeout expires,.

Optionally, in the embodiments of the disclosure, the TDLS discovery request frame includes a TDLS multi-link element;
a Presence Bitmap subfield of the TDLS multi-link element includes an EML information presence identification field;
the EML information presence identification field indicates whether the TDLS discovery request frame includes information on an EML operation mode of the TDLS initiator; and
the EML operation mode indicates whether a connection corresponding to a DL of the TDLS initiator is an EML connection.

Optionally, in the embodiments of the disclosure, the TDLS discovery request frame includes the information on the EML operation mode; and
a Common Info field of the TDLS multi-link element includes an EML Control field, and the EML Control field carries the information on the EML operation mode.

In combination with some embodiments of the second aspect, in some embodiments, the TDLS discovery request frame includes:
a response timeout for the TDLS responder to send a TDLS discovery response frame; and
the response timeout is before the EML transition timeout, or the response timeout follows a SIFS after an EML transition delay.

Optionally, in the embodiments of the disclosure, after forwarding by the AP forwards the TDLS discovery request frame to the TDLS responder, the method further includes:
Step 603: in a case where the response timeout is before the EML transition timeout, not sending by the AP the second EML operation mode notification frame to the TDLS initiator from a moment when the AP forwards the TDLS discovery request frame to the TDLS responder until the response timeout expires;
   or
Step 604: in a case where the response timeout follows a SIFS after the EML transition delay, sending or not sending by the AP the second EML operation mode notification frame to the TDLS initiator from a moment when the AP forwards the TDLS discovery request frame to the TDLS responder until the EML transition timeout expires.

The TDLS communication negotiation method of the embodiments of the disclosure includes at least one of the above steps and embodiments. For example, step 601 may be implemented as an independent embodiment, step 602 may be implemented as an independent embodiment, step 603 may be implemented as an independent embodiment, step 604 may be implemented as an independent embodiment, steps 601 and 602 may be implemented as an independent embodiment, steps 602 and 603 may be implemented as an independent embodiment, and steps 602 and 604 may be implemented as an independent embodiment, which is not limited herein.

FIG. 7 is a flowchart 3 of a TDLS communication negotiation method provided according to an embodiment of the disclosure.

As illustrated in FIG. 7, the method is applied to a TDLS responder, and includes the following steps.

At step 701, the TDLS responder receives a TDLS discovery request frame forwarded by an AP, in which the TDLS discovery request frame is received by the AP from a TDLS initiator and forwarded to the TDLS responder before sending a second EML operation mode notification frame to the TDLS initiator or before an EML transition timeout expires, and the second EML operation mode notification frame is used to respond to a first EML operation mode notification frame sent by the TDLS initiator.

Optionally, in the embodiments of the disclosure, the TDLS discovery request frame includes a TDLS multi-link element;
a Presence Bitmap subfield of the TDLS multi-link element includes an EML information presence identification field;
the EML information presence identification field indicates whether the TDLS discovery request frame includes information on an EML operation mode of the TDLS initiator; and
the EML operation mode indicates whether a connection corresponding to a DL of the TDLS initiator is an EML connection.

Optionally, in the embodiments of the disclosure, the TDLS discovery request frame includes the information on the EML operation mode; and
a Common Info field of the TDLS multi-link element includes an EML Control field, and the EML Control field carries the information on the EML operation mode.

Optionally, in the embodiments of the disclosure, the TDLS discovery request frame includes:
a response timeout for the TDLS responder to send a TDLS discovery response frame; and
the response timeout is before the EML transition timeout, or the response timeout follows a SIFS after an EML transition delay.

Optionally, in the embodiments of the disclosure, the response timeout is before the EML transition timeout, the AP does not send the second EML operation mode notification frame to the TDLS initiator from a moment when the AP forwards the TDLS discovery request frame to the TDLS responder until the response timeout expires;
or
the response timeout is follows a SIFS after the EML transition delay, the AP sends or does not send the second EML operation mode notification frame to the TDLS initiator from a moment when the AP forwards the TDLS discovery request frame to the TDLS responder until the EML transition timeout expires.

Optionally, in the embodiments of the disclosure, the response timeout is before the EML transition timeout, the method further includes:
Step 702: sending the TDLS discovery response frame to the TDLS initiator within the response timeout.

Optionally, in the embodiments of the disclosure, the response timeout follows a SIFS after the EML transition delay, the method further includes:
Step 703: sending the TDLS discovery response frame to the TDLS initiator before the EML transition timeout expires;
   or
Step 704: not sending the TDLS discovery response frame to the TDLS initiator before the EML transition timeout expires, and sending the TDLS discovery response frame to the TDLS initiator from a moment when data exchange among other EMLSR links or EMLMR links with initial control frames ends until the response timeout expires.

The TDLS communication negotiation method of the embodiments of the disclosure includes at least one of the above steps and embodiments. For example, step 701 may be implemented as an independent embodiment, step 702 may be implemented as an independent embodiment, step 703 may be implemented as an independent embodiment, steps 702 and 703 may be implemented as an independent embodiment, and steps 702 and 704 may be implemented as an independent embodiment, which is not limited herein.

The embodiments of the disclosure provide an apparatus for implementing any of the above methods. For example, an apparatus is provided, which includes units/modules for implementing steps performed by the terminal in any of the above methods. For another example, another apparatus is provided, which includes units/modules for implementing steps performed by the network device (e.g., an access network device, a core network functional node or a core network device) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor, which is included in the apparatus and connected to a memory. The memory stores indications, and the processor calls the indications stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. Or, the units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). Or, some or all of the functions of the units/modules are achieved through the design of a logical relationship between components in the circuit. In another implementation, the hardware circuit may be implemented through a programmable logic device (PLD). Taking a field programmable gate array (FPGA) as an example, it includes a large number of logical gates, and their connection relationships are configured through a configuration file to implement some or all of the functions of the above units/modules. All the units/modules of the above apparatus may be implemented entirely through software called by the processor, or entirely through the hardware circuit, or partially through software called by the processor and partially through the hardware circuit.

In the embodiments of the disclosure, the processor is a circuit having signal processing capabilities. In an implementation, the processor may be a circuit having indication reading and executing capabilities, such as a CPU, a micro-processor, a graphics processing unit (GPU) (which is understood as a micro-processor), or a digital signal processor (DSP). In another implementation, the processor implements certain functions through the logical relationship of the hardware circuit, which may be fixed or re-configurable. For example, the processor may be a hardware circuit implemented by an ASIC or a PLD, such as an FPGA. For a re-configurable hardware circuit, the procedure for the processor to load the configuration file to configure the hardware circuit is understood as a procedure for the processor to load the indications to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

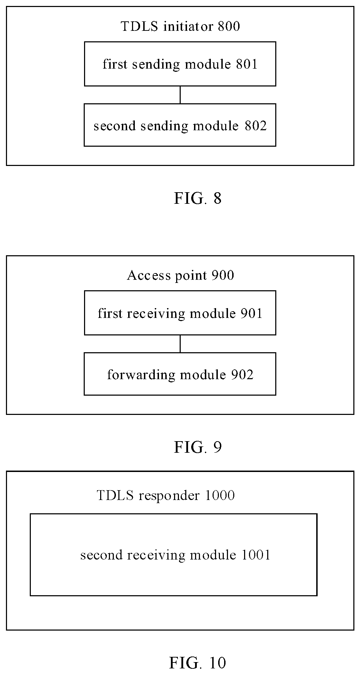

FIG. 8 is a schematic structural diagram of a TDLS initiator provided according to an embodiment of the disclosure. As illustrated in FIG. 8, the TDLS initiator 800 includes at least one of a first sending module 801 or a second sending module 802.

In some embodiments, the first sending module 801 is configured to send a first EML operation mode notification frame to an AP. The second sending module 802 is configured to send a TDLS discovery request frame to a TDLS responder via the AP before receiving a second EML operation mode notification frame sent by the AP or before an EML transition timeout expires.

Optionally, the first sending module 801 is further used to perform at least one of communication steps (e.g., steps 201, 301 and 501, but not limited thereto) performed by the TDLS initiator 101 in any of the above methods, which will not be repeated here. The second sending module 802 is further used to execute at least one of steps (e.g., steps 202, 302 and 502, but not limited thereto), which will not be repeated here.

FIG. 9 is a schematic structural diagram of an AP provided according to an embodiment of the disclosure. As illustrated in FIG. 9, the AP 900 includes: a first receiving module 901 and a forwarding module 902.

In some embodiments, the first receiving module 901 is configured to receive a first EML operation mode notification frame sent by a TDLS initiator.

The forwarding module 902 is configured to receive a TDLS discovery request frame sent by the TDLS initiator, and forward the TDLS discovery request frame to a TDLS responder before sending a second EML operation mode notification frame to the TDLS initiator or before an EML transition timeout expires.

Optionally, the first receiving module 901 is further used to perform at least one of communication steps (e.g., step 601, but not limited thereto) performed by the AP 102 in any of the above methods, and the forwarding module 902 is further used to execute at least one of communication steps (e.g., steps 203, 303 and 602, but not limited thereto) performed by the AP 102 in any of the above methods, which will not be repeated here.

FIG. 10 is a schematic structural diagram of a TDLS responder provided according to an embodiment of the disclosure. As illustrated in FIG. 10, the TDLS responder 1000 includes a second receiving module 1001.

In some embodiments, the second receiving module 1001 is configured to receive a TDLS discovery request frame forwarded by an AP.

The TDLS discovery request frame is received by the AP from a TDLS initiator and forwarded to the TDLS responder before sending a second EML operation mode notification frame to the TDLS initiator or before an EML transition timeout expires.

The second EML operation mode notification frame is used to respond to a first EML operation mode notification frame sent by the TDLS initiator.

Optionally, the second receiving module 1001 is configured to perform at least one of communication steps (e.g., step 701, but not limited thereto) performed by the TDLS initiator 101 in any of the above methods, which will not be repeated here.

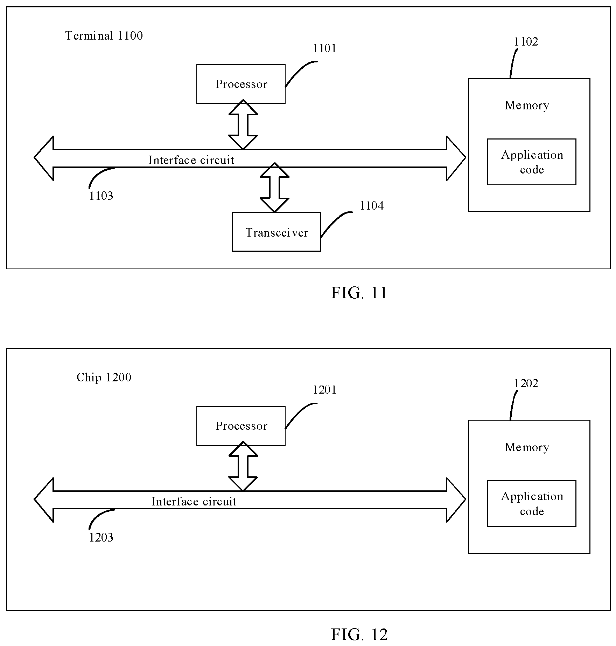

FIG. 11 is a schematic structural diagram of a terminal (e.g., a user equipment) 1100 provided by an embodiment of the disclosure. The terminal 1100 may be a chip, a chip system or a processor that supports the network device to implement any of the above methods, or a chip, a chip system or a processor that supports the terminal to implement any of the above methods. The terminal 1100 is used to implement the methods described in the above method embodiments, and, for details, reference can be made to the descriptions in the above method embodiments.

As illustrated in FIG. 11, the terminal 1100 includes one or more processors 1101. The processor 1101 may be a general-purpose processor or a dedicated processor, such as a baseband processor or a central processor. The baseband processor is used to process communication protocols and communication data, while the central processor is used to control the communication device (e.g., a base station, a baseband chip, a terminal, a terminal chip, a distributed unit (DU) or a central unit (CU)), execute programs and process data of the programs. The terminal 1100 is used to implement any of the above methods.

In some embodiments, the terminal 1100 further includes one or more memories 1102 for storing indications. Optionally, all or part of the memories 1102 are external to the terminal 1100.

In some embodiments, the terminal 1100 includes one or more transceivers 1104. In this case, the transceiver 1104 performs at least one of communication steps (e.g., steps 201, 202, 203, 204, 205, 301, 302, 303, 304, 402, 501, 502, 601, 602, 604, 701, 702, 703 and 704, but not limited thereto) such as transmission and/or reception in the above methods, and the processor 1101 performs at least one of other steps (e.g., steps 401, 403, 404, 405, 406, 407, 408, 503, 504, 505, 506, 507, 508, 509 and 603, but not limited thereto).

In some embodiments, the transceiver may include a receiver and/or a transmitter. The receiver and the transmitter may be separated or integrated together. Optionally, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

In some embodiments, the terminal 1100 further includes one or more interface circuits 1103. Optionally, the interface circuit 1103 is connected with the memory 1102, and it is used to receive signals from the memory 1102 or other devices and send signals to the memory 1102 or other devices. For example, the interface circuit 1103 can read the indications stored in the memory 1102 and send the indications to the processor 1101.

The terminal 1100 described in the above embodiments may be a user equipment or other communication devices. However, the scope of the terminal 1100 is not limited in the disclosure, and the structure of the terminal 1100 is not limited by FIG. 11. The communication device may be a standalone device or part of a larger device. For example, the communication device may be: (1) a standalone integrated circuit (IC), chip, chip system or sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 12 is a schematic structural diagram of a chip 1200 provided by an embodiment of the disclosure. For the case that the terminal 1100 is a chip or chip system reference can be made to the schematic structural diagram of the chip 1200 shown in FIG. 12, which is not limited herein.

The chip 1200 includes one or more processors 1201, and is used to implement any of the above methods.

In some embodiments, the chip 1200 includes one or more interface circuits 1203. Optionally, the interface circuit 1203 is connected to a memory 1202, and it is used to receive signals from the memory 1202 or other devices and send signals to the memory 1202 or other devices. For example, the interface circuit 1203 can read indications stored in the memory 1202 and send the indications to the processor 1201.

In some embodiments, the interface circuit 1203 performs at least one of communication steps (e.g., steps 201, 202, 203, 204, 205, 301, 302, 303, 304, 402, 501, 502, 601, 602, 604, 701, 702, 703 and 704, but not limited thereto) such as transmission and/or reception in the above methods, and the processor 1201 performs at least one of other steps (e.g., steps 401, 403, 404, 405, 406, 407, 408, 503, 504, 505, 506, 507, 508, 509 and 603, but not limited thereto).

In some embodiments, terms "interface circuit", "interface", "transceiver pin" and "transceiver" are interchangeable.

In some embodiments, the chip 1200 further includes one or more memories 1202 for storing indications. Optionally, all or part of the memories 1202 are external to the chip 1200.

The disclosure also provides a storage medium. The storage medium stores indications, and when the indications are executed by the terminal 1100, the terminal 1100 is caused to implement any of the above methods. Optionally, the storage medium is an electronic storage medium. Optionally, the storage medium may be a computer-readable storage medium or a storage medium readable by other devices, which is not limited herein. Optionally, the storage medium may be a non-transitory storage medium or a transitory storage medium, which is not limited herein.

The disclosure also provides a program product. When the program product is executed by the terminal 1100, the terminal 1100 is caused to implement any of the above methods. Optionally, the program product is a computer program product.

The disclosure also provides a computer program. When the computer program is executed by a computer, the computer is caused to implement any of the above methods.

## Claims

1. A tunneled direct link setup (TDLS) communication negotiation method, comprising:
sending, by a TDLS initiator, a first enhanced multi-link (EML) operation mode notification frame to an access point; and
sending a TDLS discovery request frame to a TDLS responder via the access point before receiving a second EML operation mode notification frame sent by the access point or before an EML transition timeout expires.

2. The method of claim 1, wherein the TDLS discovery request frame comprises at least one of:
a response timeout for the TDLS responder to send a TDLS discovery response frame; or
information on an EML operation mode of the TDLS initiator, wherein the EML operation mode indicates whether a connection corresponding to a direct link of the TDLS initiator is an EML connection.

3. The method of claim 2, wherein the TDLS discovery request frame comprises a TDLS multi-link element;
a Multi-Link Control field of the TDLS multi-link element comprises a Presence Bitmap subfield; and
the Presence Bitmap subfield comprises a response timeout presence identification bit, wherein the response timeout presence identification bit indicates whether a Common Info field of the TDLS multi-link element comprises a TDLS discovery response timeout subfield, and the TDLS discovery response timeout subfield is used to carry the response timeout.

4. The method of claim 2, wherein the response timeout is before the EML transition timeout, or the response timeout follows a short inter-frame space (SIFS) after an EML transition delay.

5. The method of claim 2, wherein the response timeout is before the EML transition timeout, the method further comprises:
in a case where the TDLS initiator receives the TDLS discovery response frame within the response timeout and does not receive the second EML operation mode notification frame from the response timeout until the EML transition timeout expires, the TDLS initiator, at the moment when the EML transition timeout expires, entering an EML operation mode according to parameter information of the first EML operation mode notification frame;
or
in a case where the TDLS initiator receives the TDLS discovery response frame within the response timeout and receives the second EML operation mode notification frame from the response timeout until the EML transition timeout expires, the TDLS initiator, upon receiving the second EML operation mode notification frame, entering an EML operation mode according to parameter information of the second EML operation mode notification frame.

6. The method of claim 2, wherein the response timeout follows a SIFS after an EML transition delay, and the TDLS initiator does not receive the second EML operation mode notification frame from a moment when the access point forwards the TDLS discovery request frame to the TDLS responder until the EML transition timeout expires, the method further comprises:
in a case where the TDLS initiator receives the TDLS discovery response frame before the EML transition timeout expires, the TDLS initiator, at the moment when the EML transition timeout expires, entering an EML operation mode according to parameter information of the first EML operation mode notification frame;
or
in a case where the TDLS initiator dose not receives the TDLS discovery response frame before the EML transition timeout expires, and receives the TDLS discovery response frame before the response timeout expires, the TDLS initiator, at the moment when the EML transition timeout expires, entering an EML operation mode according to parameter information of the first EML operation mode notification frame.

7. The method of claim 2, wherein the response timeout follows a SIFS after an EML transition delay, and the TDLS initiator receives the second EML operation mode notification frame from a moment when the access point forwards the TDLS discovery request frame to the TDLS responder until the EML transition timeout expires, the method further comprises:
in a case where the TDLS initiator receives the TDLS discovery response frame sent by the TDLS responder before receiving the second EML operation mode notification frame, the TDLS initiator, upon receiving the second EML operation mode notification frame, entering an EML operation mode according to parameter information of the second EML operation mode notification frame; or
in a case where the TDLS initiator does not receive the TDLS discovery response frame sent by the TDLS responder before receiving the second EML operation mode notification frame, and receives the TDLS discovery response frame before the response timeout expires, the TDLS initiator, upon receiving the second EML operation mode notification frame, entering an EML operation mode according to parameter information of the second EML operation mode notification frame.

8. The method of any one of claims 2-7, wherein
in a case where the TDLS initiator does not receive the TDLS discovery response frame sent by the TDLS responder within the response timeout, it is determined that the TDLS responder is not discovered.

9. A tunneled direct link setup (TDLS) communication negotiation method, comprising:
receiving, by an access point, a first enhanced multi-link (EML) operation mode notification frame sent by a TDLS initiator; and
receiving a TDLS discovery request frame sent by the TDLS initiator and forwarding the TDLS discovery request frame to a TDLS responder before sending a second EML operation mode notification frame to the TDLS initiator or before an EML transition timeout expires.

10. The method of claim 9, wherein the TDLS discovery request frame comprises a TDLS multi-link element;
a Presence Bitmap subfield of the TDLS multi-link element comprises a TDLS initiator's EML information presence identification field;
the TDLS initiator's EML information presence identification field indicates whether the TDLS discovery request frame comprises information on an EML operation mode of the TDLS initiator; and
the EML operation mode indicates whether a connection corresponding to a direct link of the TDLS initiator is an EML connection.

11. The method of claim 10, wherein the TDLS discovery request frame comprises the information on the EML operation mode; and
a Common Info field of the TDLS multi-link element comprises an EML Control field, and the EML Control field carries the information on the EML operation mode.

12. The method of claim 9, wherein the TDLS discovery request frame comprises:
a response timeout for the TDLS responder to send a TDLS discovery response frame; and
the response timeout is before the EML transition timeout, or the response timeout follows a short inter-frame space (SIFS) after an EML transition delay.

13. The method of claim 12, wherein after forwarding by the access point the TDLS discovery request frame to the TDLS responder, the method further comprises:
in a case where the response timeout is before the EML transition timeout, not sending by the access point the second EML operation mode notification frame to the TDLS initiator from a moment when the access point forwards the TDLS discovery request frame to the TDLS responder until the response timeout expires;
or
in a case where the response timeout follows a SIFS after the EML transition delay, sending or not sending by the access point the second EML operation mode notification frame to the TDLS initiator from a moment when the access point forwards the TDLS discovery request frame to the TDLS responder until the EML transition timeout expires.

14. A tunneled direct link setup (TDLS) communication negotiation method, comprising:
receiving, by a TDLS responder, a TDLS discovery request frame forwarded by an access point;
wherein the TDLS discovery request frame is received by the access point from a TDLS initiator and forwarded to the TDLS responder before sending a second enhanced multi-link (EML) operation mode notification frame to the TDLS initiator or before an EML transition timeout expires; and
the second EML operation mode notification frame is used to respond to a first EML operation mode notification frame sent by the TDLS initiator.

15. The method of claim 14, wherein the TDLS discovery request frame comprises a TDLS multi-link element;
a Presence Bitmap subfield of the TDLS multi-link element comprises a TDLS initiator's EML information presence identification field;
the TDLS initiator's EML information presence identification field indicates whether the TDLS discovery request frame comprises information on an EML operation mode of the TDLS initiator; and
the EML operation mode indicates whether a connection corresponding to a direct link of the TDLS initiator is an EML connection.

16. The method of claim 15, wherein the TDLS discovery request frame comprises the information on the EML operation mode; and
a Common Info field of the TDLS multi-link element comprises an EML Control field, and the EML Control field carries the information on the EML operation mode.

17. The method of claim 14, wherein the TDLS discovery request frame comprises:
a response timeout for the TDLS responder to send a TDLS discovery response frame; and
the response timeout is before the EML transition timeout, or the response timeout follows a short inter-frame space (SIFS) after an EML transition delay.

18. The method of claim 17, wherein
the response timeout is before the EML transition timeout, the access point does not send the second EML operation mode notification frame to the TDLS initiator from a moment when the access point forwards the TDLS discovery request frame to the TDLS responder until the response timeout expires;
or
the response timeout follows a SIFS after the EML transition delay, the access point sends or does not send the second EML operation mode notification frame to the TDLS initiator from a moment when the access point forwards the TDLS discovery request frame to the TDLS responder until the EML transition timeout expires.

19. The method of claim 17, wherein the response timeout is before the EML transition timeout, the method further comprises:
sending the TDLS discovery response frame to the TDLS initiator within the response timeout.

20. The method of claim 17, wherein the response timeout follows a SIFS after the EML transition delay, the method further comprises:
sending the TDLS discovery response frame to the TDLS initiator before the EML transition timeout expires;
or
not sending the TDLS discovery response frame to the TDLS initiator before the EML transition timeout expires, and sending the TDLS discovery response frame to the TDLS initiator from a moment when data exchange among other EML single radio (EMLSR) links or EML multiple radio (EMLMR) links receiving an initial control frame ends until the response timeout expires.

21. A tunneled direct link setup (TDLS) initiator, comprising:
a first sending module, configured to send a first enhanced multi-link (EML) operation mode notification frame to an access point; and
a second sending module, configured to send a TDLS discovery request frame to a TDLS responder via the access point before receiving a second EML operation mode notification frame sent by the access point or before an EML transition timeout expires.

22. An access point, comprising:
a first receiving module, configured to receive a first enhanced multi-link (EML) operation mode notification frame sent by a TDLS initiator; and
a forwarding module, configured to receive a TDLS discovery request frame sent by the TDLS initiator, and forward the TDLS discovery request frame to a TDLS responder before sending a second EML operation mode notification frame to the TDLS initiator or before an EML transition timeout expires.

23. A tunneled direct link setup (TDLS) responder, comprising:
a second receiving module, configured to receive a TDLS discovery request frame forwarded by an access point;
wherein the TDLS discovery request frame is received by the access point from a TDLS initiator and forwarded to the TDLS responder before sending a second enhanced multi-link (EML) operation mode notification frame to the TDLS initiator or before an EML transition timeout expires; and
the second EML operation mode notification frame is used to respond to a first EML operation mode notification frame sent by the TDLS initiator.

24. A tunneled direct link setup (TDLS) initiator, comprising:
one or more processors;
wherein the TDLS initiator is used to implement the TDLS communication negotiation method of any one of claims 1-8.

25. An access point, comprising:
one or more processors;
wherein the access point is used to implement the TDLS communication negotiation method of any one of claims 9-13.

26. A tunneled direct link setup (TDLS) responder, comprising:
one or more processors;
wherein the TDLS responder is used to implement the TDLS communication negotiation method of any one of claims 14-20.

27. A communication system, comprising a tunneled direct link setup (TDLS) initiator, an access point and a TDLS responder, wherein the TDLS initiator is used to implement the TDLS communication negotiation method of any one of claims 1-8, the access point is used to implement the TDLS communication negotiation method of any one of claims 9-13, and the TDLS responder is used to implement the TDLS communication negotiation method of any one of claims 14-20.

28. A storage medium for storing instructions, wherein when the instructions are executed by a communication device, the communication device is caused to implement the TDLS communication negotiation method according to any one of claims 1-8, the TDLS communication negotiation method according to any one of claims 9-13, or the TDLS communication negotiation method according to any one of claims 14-20.
